(19) Europäisches Patentamt
European Patent Office
Office européen des brevets

(11) **EP 4 685 921 A1**

(12) **EUROPEAN PATENT APPLICATION**
published in accordance with Art. 153(4) EPC

(43) Date of publication:
**28.01.2026 Bulletin 2026/05**

(21) Application number: **25752447.0**

(22) Date of filing: **06.02.2025**

(51) International Patent Classification (IPC):
$H01M\ 10/54^{(2006.01)}$    $H01M\ 4/1391^{(2010.01)}$
$H01M\ 4/131^{(2010.01)}$    $H01M\ 4/525^{(2010.01)}$
$H01M\ 10/052^{(2010.01)}$    $H01M\ 4/36^{(2006.01)}$
$H01M\ 4/02^{(2006.01)}$

(52) Cooperative Patent Classification (CPC):
H01M 4/02; H01M 4/131; H01M 4/1391;
H01M 4/36; H01M 4/525; H01M 10/052;
H01M 10/54

(86) International application number:
**PCT/KR2025/001765**

(87) International publication number:
**WO 2025/170337 (14.08.2025 Gazette 2025/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2024 KR 20240018703
05.02.2025 KR 20250014491**

(71) Applicant: **LG Energy Solution, Ltd.
Seoul 07335 (KR)**

(72) Inventors:
• **PARK, Gwangseon
Daejeon 34122 (KR)**
• **SEO, Yongsik
Daejeon 34122 (KR)**
• **LEE, Jeongbae
Daejeon 34122 (KR)**

(74) Representative: **Hoffmann Eitle
Patent- und Rechtsanwälte PartmbB
Arabellastraße 30
81925 München (DE)**

(54) **METHOD FOR REGENERATING POSITIVE ELECTRODE ACTIVE MATERIAL AND REGENERATED POSITIVE ELECTRODE ACTIVE MATERIAL MANUFACTURED THEREFROM**

(57) The present invention relates to a method of recycling a cathode active material and a recycled cathode active material prepared using the same. More particularly, the present invention relates to a method of recycling a cathode active material, the method including step (a) of heat-treating a waste cathode composition containing a cathode active material, a conductive material, a binder, and a solvent to remove the solvent; step (b) of pulverizing the waste cathode composition from which the solvent has been removed; step (c) of heat-treating the powdered waste cathode composition at 300 to 650 °C to remove the binder and the conductive material and recover the cathode active material; step (d) of adding a lithium precursor to the recovered cathode active material and performing annealing at 400 to 1000 °C; and step (e) of washing the annealed cathode active material with a washing solution and a recycled cathode active material prepared using the same.

The present invention has an effect of providing a method of recycling a cathode active material and the recycled cathode active material prepared using the same. According to the present invention, by heat-treating a waste cathode composition containing a cathode active material, a conductive material, a binder, and a solvent at low temperature to remove the solvent, pulverizing the waste cathode composition, and then performing heat treatment, the binder and the conductive material may be completely removed, the structure thereof may be restored to that of a fresh cathode active material, thermal stability may be excellent, the amount of residual lithium may be reduced, and the initial capacity and lifespan characteristics of a secondary battery may be excellent.

**(Cont. next page)**

EP 4 685 921 A1

[FIG. 2]

**Description**

[Technical Field]

[Cross-Reference to Related Applications]

This application claims priority to Korean Patent Application No. 10-2024-0018703, filed on February 7, 2024, and Korean Patent Application No. 10-2025-0014491, re-filed on February 5, 2025, based on the priority of the above patent, in the Korean Intellectual Property Office, the disclosures of each of which are incorporated herein by reference.

The present invention relates to a method of recycling a cathode active material and a recycled cathode active material prepared using the same. According to the present invention, by heat-treating a waste cathode composition containing a cathode active material, a conductive material, a binder, and a solvent at low temperature to remove the solvent, pulverizing the waste cathode composition, and then performing heat treatment, the binder and the conductive material may be completely removed, the structure thereof may be restored to that of a fresh cathode active material, thermal stability may be excellent, the amount of residual lithium may be reduced, and the initial capacity and lifespan characteristics of a secondary battery may be excellent. In addition, environmental friendliness may be achieved by not using acids in recovery and recycling processes, and thus process costs may be reduced as neutralization and wastewater treatment are not required. In addition, the cathode active material is recycled without decomposition, so there are no discarded metal elements. In addition, since no organic solvents are used, the generation of toxic gases or explosions may be prevented, and economic efficiency and productivity may be greatly improved.

[Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

The cathode is manufactured by applying a cathode composition containing a cathode active material, a binder, a conductive material, and a solvent onto metal foil such as aluminum, drying the metal foil, and performing compression molding.

Lithium-based oxide is mainly used as the cathode active material, and the lithium-based oxide generally contains rare metals such as cobalt, nickel, and manganese.

It is not easy to mix the cathode active material, binder, conductive material, and solvent that make up the cathode composition. Accordingly, when manufacturing a cathode composition, the above components are added in a specific order and stirred. Then, the step of adjusting the solid content concentration, composition ratio, or viscosity of slurry is repeated. When necessary, a predetermined dispersant is added. When the cathode composition is manufactured in large quantities, when the manufactured cathode compositions do not have the desired properties and are therefore defective, the properties cannot be adjusted by adding a specific component, and therefore the defective cathode compositions are discarded.

In addition, a coating process of transferring the prepared cathode composition to a pipeline, applying the cathode composition onto metal foil through a slit die, and drying the metal foil is performed. At this time, when the cathode composition has many fine particles or the pipeline is blocked due to non-uniform distribution, all manufactured cathode compositions are discarded.

In addition, after the manufactured cathode composition is applied to the metal foil, when the cathode composition remains, gelation of the cathode composition occurs over time, and the dispersion decreases due to precipitation of the solids, so the remaining cathode composition is discarded.

As described above, resources are wasted due to the cathode composition being discarded during the process of manufacturing a cathode composition and the process of coating a cathode composition. In addition, the environment is polluted due to the toxicity of the solvent.

Therefore, there is an urgent need to develop a method of safely recycling a cathode active material having improved rate performance in an environmentally friendly manner at a low cost through a simple process without loss of metal elements from a waste cathode composition.

[Disclosure]

[Technical Problem]

Therefore, the present invention has been made in view of the above problems, and it is one object of the present invention to provide a method of recycling a cathode active material. According to the method of the present invention, by heat-treating a waste cathode composition containing a cathode active material, a conductive material, a binder, and a solvent at low temperature to remove the solvent, pulverizing the waste cathode composition, and then performing heat treatment, the binder and the conductive material may be completely removed, the structure thereof may be restored to that of a fresh cathode active material, thermal stability may be excellent, the amount of residual lithium may be reduced, and the initial capacity and lifespan characteristics of a secondary battery may be excellent. In addition, environmental friendliness may be achieved by not using acids in recovery and recycling processes, and thus process costs may be reduced as neutralization and wastewater treatment are not required. In addition, the cathode active material is recycled without decomposition, so there are no discarded metal elements. In addition, since no organic solvents are used, the generation of toxic gases or explosions may be prevented, economic efficiency and productivity may be greatly improved.

It is another object of the present invention to provide a cathode active material with excellent thermal stability and reduced amount of residual lithium.

The above and other objects can be accomplished by the present invention described below.

[Technical Solution]

I) In accordance with one aspect of the present invention, provided is a method of recycling a cathode active material, the method including (a) heat-treating a waste cathode composition containing a cathode active material, a conductive material, a binder, and a solvent to remove the solvent; (b) pulverizing the waste cathode composition from which the solvent has been removed; (c) heat-treating the powdered waste cathode composition at 300 to 650 °C to remove the binder and the conductive material and recover the cathode active material; (d) adding a lithium precursor to the recovered cathode active material and performing annealing at 400 to 1000 °C; and (e) washing the annealed cathode active material with a washing solution.

II) According to I), the waste cathode composition may be in form of slurry.

III) According to I) or II), the heat treatment of step (a) may be performed at 80 to 120 °C.

IV) According to I) to III), the heat treatment of step (a) may be performed for 30 minutes to 4 hours.

V) According to I) to IV), the pulverizing of step (b) may be performed by dry grinding.

VI) According to I) to V), the dry grinding may be performed using a hand mill, a pin mill, a disc mill, a cutting mill, or a hammer mill.

VII) According to I) to VI), the pulverizing of step (b) may further include performing sieving after pulverizing.

VIII) According to I) to VII), powder obtained after step (b) may have an average particle size of 45 $\mu$m or less.

IX) According to I) to VIII), the cathode active material may include one or more selected from the group consisting of a lithium nickel oxide (LNO)-based cathode active material, a nickel·cobalt·manganese (NCM)-based cathode active material, a nickel·cobalt·aluminum (NCA)-based cathode active material, a nickel·cobalt·manganese·aluminum (NCMA)-based cathode active material, and a lithium iron phosphate (LFP)-based cathode active material.

X) According to I) to IX), the solvent may include one or more selected from the group consisting of dimethyl sulfoxide (DMSO), isopropyl alcohol, N-methyl-2-pyrrolidone (NMP), acetone, and water.

XI) According to I) to X), the lithium precursor may include one or more of LiOH, $Li_2CO_3$, $LiNO_3$, and $Li_2O$.

XII) According to I) to XI), based on an amount of lithium in the recovered cathode active material, the lithium precursor of step (d) may be added in at least an amount corresponding to a reduced molar ratio of lithium in the cathode active material of step (a).

XIII) According to I) to XII), the washing solution may be water or an aqueous alkaline lithium compound solution.

XIV) According to I) to XIII), the method of recycling a cathode active material may further include (f) surface-coating the washed cathode active material.

XV) In accordance with another aspect of the present invention, provided is a cathode active material including one or more selected from the group consisting of a lithium nickel oxide (LNO)-based cathode active material, a nickel·cobalt·manganese (NCM)-based cathode active material, a nickel·cobalt·aluminum (NCA)-based cathode active material, a nickel·cobalt·manganese·aluminum (NCMA)-based cathode active material, and a lithium iron phosphate (LFP)-based cathode active material; having a crystal structure with a c-axis length of 14.200 to 14.210 Å, a cell volume of 101.65 to 101.75 Å$^3$, and a crystallite size of 82 to 90 nm as measured by X-ray diffraction (XRD); and having a thermal decomposition temperature of 700 °C or higher as measured by thermogravimetric analysis (TGA).

XVI) According to I) to XV), a surface of the cathode active material may be coated with a coating agent containing a metal or carbon.

[Advantageous Effects]

The present invention has an effect of providing a cathode active material. According to the present invention, by heat-treating, at low temperature, a substandard waste cathode composition generated during a cathode manufacturing process, a waste cathode composition clogged in a pipeline during the process of coating metal foil with a cathode composition, or the residual waste cathode composition remaining after coating a current collector with a cathode composition, a solvent is removed. Then, pulverizing is performed, and heat treatment is performed. Through this process, a binder and a conductive material within the waste cathode composition can be completely removed through smooth contact with air or oxygen. As a result, the structure is restored to that of a fresh cathode active material. Thus, thermal stability can be excellent, the amount of residual lithium can be reduced, and the capacity characteristics and lifespan characteristics of a secondary battery can be excellent.

In addition, the present invention has an effect of providing a method of recycling a cathode active material. According to the method of the present invention, environmental friendliness can be achieved by not using acids in recovery and recycling processes of a cathode active material, and thus process costs can be reduced as neutralization and wastewater treatment are not required. In addition, the cathode active material is recycled without decomposition, so there are no discarded metal elements. In addition, since organic solvents are not used, the generation of toxic gases or explosions can be prevented, and economic efficiency and productivity can be greatly improved.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a graph evaluating the initial capacity using a coin half cell for each of the recycled cathode active materials manufactured in Example 1 and Comparative Example 1.

FIG. 2 is a graph evaluating the lifespan characteristics using a coin half cell for each of the recycled or fresh cathode active materials manufactured in Example 1 and Reference Example.

FIG. 3 is a graph showing the results of thermogravimetric analysis (TGA) of each of the recycled cathode active materials manufactured in Example 1 and Comparative Example 1.

FIG. 4 is a flow chart explaining a process of recycling a waste cathode composition according to an embodiment of the present invention.

[Best Mode]

The present inventors confirmed that, when a substandard waste cathode composition generated during a cathode manufacturing process or the residual waste cathode composition remaining after applying a cathode composition onto a cathode current collector was heat-treated at low temperature to remove a solvent, the waste cathode composition was pulverized, and heat treatment was performed, a binder and a conductive material were completely removed by smooth contact with air or oxygen. The structure of the cathode active material recycled from the waste cathode composition was restored to that of a fresh cathode active material, and thus the recycled cathode active material had excellent thermal stability. In addition, the amount of residual lithium was reduced. In addition, the initial capacity and lifespan characteristics of a secondary battery were improved. Based on these results, the present inventors conducted further studies to complete the present invention.

Hereinafter, each step of a method of recycling a cathode active material according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

**Method of recycling cathode active material**

The method of recycling a cathode active material according to the present invention includes step (a) of heat-treating a waste cathode composition containing a cathode active material, a conductive material, a binder, and a solvent to remove the solvent; step (b) of pulverizing the waste cathode composition from which the solvent has been removed; step (c) of heat-treating the powdered waste cathode composition at 300 to 650 °C to remove the binder and the conductive material and recover the cathode active material; step (d) of adding a lithium precursor to the recovered cathode active material and performing annealing at 400 to 1000 °C; and step (e) of washing the annealed cathode active material with a washing solution. In this case, since the structure of the obtained recycled cathode active material is restored to that of a fresh cathode active material, thermal stability may be excellent, the amount of residual lithium may be reduced, the initial capacity and lifespan characteristics of a secondary battery may be excellent, environmental friendliness may be achieved, process costs may be reduced, loss of metal elements may be prevented, the generation of toxic gases or explosions may be suppressed, and economic efficiency and productivity may be greatly improved.

Hereinafter, each step of the method of recycling a cathode active material will be described in detail.

**(a) Heat-treating cathode composition to remove solvent**

In the present invention, the method of recycling a cathode active material includes step (a) of heat-treating a waste cathode composition containing a cathode active material, a conductive material, a binder, and a solvent to remove the solvent. In this case, the subsequent pulverizing process the cathode composition may be easily performed.

For example, the waste cathode composition may be in the form of slurry. As a specific example, the waste cathode composition may be defective slurry having a cathode composition that does not meet the specifications, defective slurry caused by blockage of pipeline during the coating process, or the remaining amount of slurry after application on a current collector.

For example, the heat treatment may be performed in air or under an oxygen atmosphere. In this case, the solvent may be easily removed, and thus the subsequent pulverizing process the cathode composition may be easily performed.

For example, in the oxygen atmosphere, the purity may be 59 % or more, preferably 70 % or more, more preferably 80 % or more, still more preferably 90 % or more, still more preferably 90 to 99 %. Within this range, the solvent may be easily removed, and thus the subsequent pulverizing process the cathode composition may be easily performed.

The purity (%) of the oxygen may be expressed as volume% or mol%.

The purity of oxygen in the present invention may be measured without particular limitations using measurement methods commonly used in the technical field to which the present invention pertains.

For example, the heat treatment temperature may be 80 to 120 °C, preferably 85 to 115 °C, more preferably 90 to 110 °C. Within this range, the solvent may be completely removed, and thus the subsequent pulverizing process the cathode composition may be easily performed.

For example, the heat treatment time may be 30 minutes to 4 hours, preferably 1 hour to 3.5 hours, more preferably 1.5 hours to 3 hours, still more preferably 1.5 hours to 2.5 hours. Within this range, the solvent may be completely removed, and thus the subsequent pulverizing process the cathode composition may be easily performed.

The cathode active material may include preferably one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below.

[Chemical Formula 1]          $Li_aNi_xMn_yCo_zM_wO_{2+\delta}$

In Chemical Formula 1, M includes one or more selected from the group consisting of B, W, Al, Ti, and Mg, $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$.

For example, the conductive material may be a carbon-based conductive material, preferably carbon black, carbon nanotubes (CNTs), or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

The solvent is used to mix the cathode active material, the binder, and/or the conductive material, and a solvent commonly used in the technical field to which the present invention belongs may be used.

For example, the solvent may include one or more selected from the group consisting of dimethyl sulfoxide (DMSO), isopropyl alcohol, N-methyl-2-pyrrolidone (NMP), acetone, and water.

For example, the waste cathode composition may further include a dispersant.

For example, the dispersant may include one or more selected from the group consisting of cellulose-based compounds, polyalkylene oxides, polyvinyl alcohol, polyvinyl pyrrolidone, polyvinyl acetal, polyvinyl ether, polyvinyl sulfonic acid, polyvinyl chloride (PVC), polyvinylidene fluoride, chitosan, starch, amylose, polyacrylamide, poly-N-isopropyl acrylamide, poly-N,N-dimethyl acrylamide, polyethyleneimine, polyoxyethylene, poly(2-methoxyethoxyethylene), poly(acrylamide-co-diallyldimethylammonium chloride), acrylonitrile-butadienestyrene (ABS) copolymers, acrylate-styrene-acrylonitrile (ASA) copolymers, a mixture of acrylate-styrene-acrylonitrile (ASA) copolymer and propylene carbonate, styrene-acrylonitrile (SAN) copolymers, and methacrylate-acrylonitrile-butadiene-styrene (MABS) copolymers.

**(b) Pulverizing waste cathode composition from which solvent has been removed**

The method of recycling a cathode active material according to the present invention includes step (b) of pulverizing the waste cathode composition from which the solvent has been removed. In this case, the binder and conductive material in the cathode composition are completely removed in the subsequent heat treatment step. Thus, the structure may be restored to that of a fresh cathode active material, thermal stability may be excellent, and the amount of residual lithium may be reduced.

The pulverizing of step (b) is to make a substance into powder or make the substance into a powder form. For example, the pulverizing of step (b) may be performed by dry grinding. In this case, uniform grinding may be performed.

In the present disclosure, dry conditions commonly defined in the technical field to which the present invention belongs may be used in the present invention without any particular limitation. For example, the dry conditions may be a state in which no solvent is added and/or a dry state and/or a condition of using dry grinding equipment.

A dry grinding method commonly used in the technical field to which the present invention belongs may be used in the present invention without any special limitation. For example, the dry grinding may be performed using a hand mill, a pin mill, a disc mill, a cutting mill, or a hammer mill. In this case, the cathode composition from which the solvent has been removed may be uniformly pulverized, and the powdered cathode composition may be immediately introduced into the heat treatment step.

Preferably, the pulverizing of step (b) may further include a step of performing sieving after pulverizing of the waste cathode composition. The pulverizing of step (b) may further include a step of performing sieving using a sieve with a mesh size of preferably 230 to 500, more preferably 270 to 450, still more preferably 325 to 450, still more preferably 325. In this case, a cathode composition with uniform particle size may be obtained, and large-sized particles may be removed. Accordingly, the dispersion of the recycled cathode active material may be improved when manufacturing the recycled cathode active material in the form of slurry.

For example, the powdered waste cathode composition obtained after step (b) may have an average particle size of 45 $\mu$m or less, preferably 40 $\mu$m or less, more preferably 35 $\mu$m or less, still more preferably 10 to 35 $\mu$m. Within this range, since the particle size of the powdered waste cathode composition becomes uniform, the binder and conductive material may be completely removed in the subsequent heat treatment process.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter ($D_{50}$) is calculated based on 50 % of the particle size distribution in the measuring device.

**(c) Recovering cathode active material from powdered waste cathode composition**

The method of recycling a cathode active material according to the present invention includes step (c) of heat-treating the powdered waste cathode composition at 300 to 650 °C to remove the binder and the conductive material and recover the cathode active material, preferably step (c) of heat-treating the powdered waste cathode composition at 300 to 650 °C in air or under an oxygen atmosphere to remove the binder and the conductive material and recover a cathode active material. In this case, since the powdered waste cathode composition is readily exposed to air or oxygen, the binder and conductive material may be completely removed through thermal decomposition into $CO_2$ and $H_2O$. Accordingly, the structure may be restored to that of a fresh cathode active material, thermal stability may be excellent, and the amount of residual lithium may be reduced.

The heat treatment temperature may be preferably 400 to 600 °C, more preferably 500 to 600 °C, still more preferably 530 to 580 °C. Within this range, since the binder and the conductive material are completely removed, the structure may be restored to that of a fresh cathode active material, thermal stability may be excellent, and the amount of residual lithium may be reduced.

The heat treatment time may be preferably 10 minutes to 5 hours, more preferably 30 minutes to 5 hours, still more preferably 30 minutes to 2 hours, still more preferably 30 minutes to 1 hour. Within this range, since the binder and the conductive material are completely removed, the structure may be restored to that of a fresh cathode active material, thermal stability may be excellent, and the amount of residual lithium may be reduced.

In the present disclosure, the heat treatment time is time of heat treatment performed at the corresponding heat treatment temperature, and does not include time required to reach the corresponding heat treatment temperature.

For example, the heat treatment may be performed at a temperature increase rate of 1 to 20 °C/min, preferably 3 to 10 °C/min, more preferably 3 to 7 °C/min. Within this range, heat treatment may be performed without causing strain to heat treatment equipment, and thermal shock to the powdered cathode composition may be prevented.

For example, the waste cathode composition may include a dispersant. A dispersant that is removed by thermal decomposition at the heat treatment temperature may be used in the present invention without particular limitation.

**(d) Adding lithium precursor to recovered cathode active material and performing annealing**

The method of recycling a cathode active material according to the present invention includes step (d) of adding a lithium precursor to the recovered cathode active material and performing annealing at 400 to 1000 °C. In this case, a cathode active material having excellent initial discharge capacity, rate performance, capacity characteristics, and resistance characteristics may be provided. In addition, since the process of washing the recovered active material is omitted, economic efficiency and productivity may be greatly improved, and damage to the cathode active material may be minimized.

Step (d) of performing annealing may be preferably a step of adding a lithium precursor to the recovered cathode active material without washing and performing annealing at 400 to 1000 °C under an oxygen ($O_2$) atmosphere or in air. In this case, the crystallinity of the cathode active material may be improved, that is, the crystallinity thereof may be increased or the crystal structure thereof may be restored. Thus, the battery characteristics of the recycled cathode active material may be improved.

The lithium precursor may preferably include one or more selected from the group consisting of LiOH, $Li_2CO_3$, $LiNO_3$, and $Li_2O$.

Preferably, based on the amount of lithium in the recovered cathode active material, the lithium precursor may be added in at least an amount corresponding to a reduced molar ratio of lithium in the cathode active material of step (a). As a specific example, when the recovered cathode active material of step (d) is the cathode active material represented by Chemical Formula 1, based on 1 molar ratio of lithium in the cathode active material, the lithium precursor may be added in an amount corresponding to a molar ratio of 0.0001 to 0.2 of lithium, preferably a molar ratio of 0.001 to 0.1 of lithium, more preferably a molar ratio of 0.001 to 0.07 of lithium, still more preferably a molar ratio of 0.001 to 0.03 of lithium, still more preferably a molar ratio of 0.001 to 0.02 of lithium, still more preferably a molar ratio of 0.005 to 0.17 of lithium, still more preferably a molar ratio of 0.007 to 0.015 of lithium, most preferably a molar ratio of 0.009 to 0.013 of lithium. Within this range, by replenishing lithium in the recycled cathode active material, the crystallinity may be improved, that is, the crystallinity may be increased or the crystal structure may be restored. Thus, the battery characteristics of the recycled cathode active material may be improved.

As another example, based on 100 mol% in total of lithium included the cathode active material as a raw material, the lithium precursor may be added in an amount corresponding to 1 to 25 mol%, more preferably 1 to 20 mol%, still more preferably 3 to 17 mol%. Within this range, since there is no residual precursor that causes an increase in the resistance of the recycled cathode active material, battery characteristics may be improved. In addition, economic advantages may be obtained because the crystal structure may be recovered using a smaller amount of lithium precursor than conventional methods.

As another example, in the case of a lithium iron phosphate compound, which is the cathode active material as a raw material, based on 100 mol% in total of lithium included the cathode active material as a raw material, the lithium precursor may be added in an amount corresponding to 0 to 25 mol%, more preferably 0.1 to 20 mol%, still more preferably 1 to 17 mol%. Within this range, since there is no residual precursor that causes an increase in the resistance of the recycled cathode active material, battery characteristics may be improved. In addition, economic advantages may be obtained because the crystal structure may be recovered using a smaller amount of lithium precursor than conventional methods.

The annealing temperature may be controlled within a limited range depending on the melting points of a lithium precursor. For example, the melting point of $LiCO_3$ is 723 °C, and annealing may be performed at preferably 700 to 900 °C, more preferably 710 to 780 °C. The melting point of LiOH is 462 °C, and annealing may be performed at preferably 400 to 750 °C, more preferably 400 to 720 °C, still more preferably 450 to 700 °C, still more preferably 550 to 670 °C. Within this range, the crystal structure may be recovered, and thus the rate performance of a battery may be excellent.

The annealing temperature may preferably be a temperature exceeding the melting point of the lithium precursor. However, when the annealing temperature exceeds 1000 °C, thermal decomposition of the cathode active material may occur, which may result in a deterioration in battery performance. Accordingly, an annealing temperature of 1000 °C or lower may be desirable.

The annealing temperature may preferably be reached at a heating rate of 1 to 10 °C/min, more preferably 1 to 5 °C/min, still more preferably 2 to 4 °C/min. In this case, the crystallinity of the recycled cathode active material may be further increased, thereby improving the battery characteristics of the recycled cathode active material.

For example, the annealing step includes a cooling process, which may, as a specific example, be natural cooling within a furnace. In this case, the crystallinity of the recycled cathode active material may be further increased, thereby improving the battery characteristics of the recycled cathode active material.

In the present disclosure, annealing may follow the definition used in the technical field to which the present invention pertains. As a specific example, annealing may be defined as a heat treatment operation that heals deformation or lattice defects and increases crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

For example, the amount of LiOH remaining on the surface of the cathode active material obtained after step (d) may be 0.90 % by weight or less, preferably 0.85 % by weight or less, more preferably 0.001 to 0.85 % by weight, still more preferably 0.01 to 0.85 % by weight. Within this range, a cathode active material having excellent initial capacity and lifespan characteristics may be provided.

For example, the amount of $Li_2CO_3$ remaining on the surface of the cathode active material obtained after step (d) may be 0.7 % by weight or less, preferably 0.6 % by weight or less, more preferably 0.001 to 0.6 % by weight, still more preferably 0.01 to 0.6 % by weight. Within this range, a cathode active material having excellent initial capacity and lifespan characteristics may be provided.

For example, the total amount of LiOH and $Li_2CO_3$ remaining on the surface of the cathode active material obtained after step (d) may be 1.6 % by weight or less, preferably 1.4 % by weight or less, more preferably 0.001 to 1.4 % by weight, still more preferably 0.01 to 1.4 % by weight. Within this range, a cathode active material having excellent initial capacity and lifespan characteristics may be provided.

In the present disclosure, the amount of LiOH and $Li_2CO_3$ remaining on the surface of the cathode active material may be measured using a measurement method commonly used in the technical field to which the present invention belongs. For example, 5 g of the cathode active material is dispersed in 100 ml of distilled water and mixed at 300 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and $Li_2CO_3$ in the cathode active material are calculated.

For example, in the cathode active material obtained after step (d), the amount of residual fluorine (F) may be 4000 to 9000 mg/kg, preferably 5000 to 8000 mg/kg, more preferably 6000 to 7000 mg/kg. Within this range, since the conductive material and the binder are sufficiently thermally decomposed and completely removed, the initial capacity and lifespan characteristics of the cathode active material may be excellent.

In the present disclosure, the content of residual fluorine (F) may be measured using a measurement method commonly used in the technical field to which the present invention belongs, and specifically, may be measured using an ICP analyzer.

**(e) Washing annealed cathode active material with washing solution**

The method of recycling a cathode active material according to the present invention include step (e) of washing the annealed cathode active material with a washing solution. In this case, since the lithium compounds that do not participate in the reaction after the addition of lithium precursor and remain on the surface of the cathode active material are removed, the battery characteristics may be improved.

The washing may preferably include a step of mixing the annealed cathode active material with a washing solution and then filtering the cathode active material and a step of drying the solid cathode active material obtained after the filtering. In this case, excess lithium that tends to remain in the cathode active material may be effectively removed.

The drying may be performed at preferably 100 to 500 °C, more preferably 120 to 400 °C, still more preferably 120 to 300 °C, still more preferably 120 to 200 °C. Within this range, residual Li may be effectively removed.

The drying may be preferably vacuum drying.

In the present disclosure, vacuum drying, which is commonly practiced in the technical field to which the present invention belongs, may be used in the present invention without particular limitation.

The washing may include a step of mixing the cathode active material and the washing solution in a weight ratio of preferably 1:3 to 1:20, more preferably 1:5 to 1:15, still more preferably 1:7 to 1:12 and performing annealing and a step of drying the solid cathode active material obtained after the filtration. In this case, lithium precursors such as LiOH and $Li_2CO_3$ may be effectively removed.

For example, the washing solution may be water or an aqueous alkaline lithium compound solution, preferably water. In this case, lithium precursors such as LiOH and $Li_2CO_3$ that are likely to remain on the surface of the cathode active material may be completely removed with a small amount of washing solution. Thus, wastewater treatment may not be required, and the rate performance of a battery may be greatly improved.

The water is more preferably distilled or deionized water. In this case, lithium precursors such as LiOH and $Li_2CO_3$ that are likely to remain on the surface of the cathode active material may be completely removed with a small amount of washing solution. Thus, wastewater treatment may not be required, and the rate performance of a battery may be greatly improved.

The aqueous alkaline lithium compound solution may include a lithium compound in preferably an amount of greater than 0 % by weight and 15 % by weight or less, more preferably an amount of greater than 0 % by weight and 10 % by weight or less or 0.1 to 10 % by weight. In this case, lithium precursors such as LiOH and $Li_2CO_3$ that are likely to remain on the surface of the cathode active material may be completely removed with a small amount of washing solution. Thus, wastewater treatment may not be required, and the rate performance of a battery may be greatly improved.

Mixing of the annealed cathode active material and the washing solution may preferably be performed by stirring. The stirring is not particularly limited, but may be mechanical stirring or ultrasonic stirring.

The stirring may be performed for preferably 30 minutes, more preferably 20 minutes, still more preferably 15 minutes, still more preferably 5 to 10 minutes. Within this range, residual lithium may be effectively removed.

For example, the stirring may be performed at 200 to 1000 rpm, preferably 300 to 800 rpm, more preferably 400 to 700 rpm. Within this range, residual lithium may be effectively removed.

For example, the filtration may be vacuum filtration using a filter, or the filtration may be performed using a filter press.

### (f) Coating surface of washed cathode active material to obtain reusable cathode active material

The method of recycling a cathode active material according to the present invention preferably includes step (f) of coating the surface of the washed cathode active material to obtain a reusable cathode active material. In this case, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then may be heat-treated at 100 to 1200 °C, more preferably 200 to 1000 °C, still more preferably 250 to 800 °C. In this case, structural stability and electrochemical performance may be improved while maintaining the intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 100 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The heat treatment time may be preferably 1 to 16 hours, more preferably 3 to 7 hours. Within this range, structural stability and electrochemical performance may be improved while maintaining the intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor-phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 $m^2/g$, more preferably an average diameter of 10 to 100 nm and a specific surface area of 20 to 100 $m^2/g$. Within this range, the coating agent may be uniformly adhered to the surface of the cathode active material, thereby improving the structural stability of the cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

For example, the crystal structure of the recycled cathode active material obtained in step (f) may have an a-axis length of 2.871 to 2.888 Å, preferably 2.872 to 2.878 Å, more preferably 2.874 to 2.876 Å as measured by XRD. Within this range, battery characteristics may be improved.

For example, the crystal structure of the recycled cathode active material obtained in step (f) may have a c-axis length of 14.200 to 14.210 Å, preferably 14.202 to 14.208 Å, more preferably 14.204 to 14.208 Å as measured by XRD. Within this range, battery characteristics may be improved.

For example, the crystal structure of the recycled cathode active material obtained in step (f) may have a cell volume of 101.65 to 101.75 $Å^3$, preferably 101.67 to 101.72 $Å^3$, more preferably 101.68 to 101.71 $Å^3$ as measured by XRD. Within this range, battery characteristics may be improved.

For example, the crystal structure of the recycled cathode active material obtained in step (f) may have a crystallite size of 82 to 90 nm, preferably 84 to 88 nm as measured by XRD. Within this range, battery characteristics may be improved.

In the present disclosure, the a-axis length, c-axis length, cell volume, and crystallite size of the crystal structure measured by XRD may be measured by measurement methods commonly used in the technical field to which the present invention belongs. For example, data obtained through X-ray diffraction analysis using CuKα rays as a source for the cathode active material may be calculated using the Rietveld refinement method to measure the a-axis length, c-axis length, and cell volume of the crystal structure. The crystallite size may be measured using peak broadening of X-ray diffraction data obtained by X-ray diffraction analysis (XRD), and the crystallite size may be measured by quantitative calculation using the Scherrer Equation.

For example, the recycled cathode active material obtained in step (f) may have a thermal decomposition temperature of 700 °C or higher, preferably 720 °C or higher, more preferably 730 to 800 °C as measured by thermogravimetric analysis (TGA). Within this range, due to excellent thermal stability, battery characteristics may be improved.

**Recycled cathode active material**

A recycled cathode active material of the present invention is prepared by the method of recycling a cathode active material. In this case, the rate performance of a battery may be improved, and electrochemical performance, resistance characteristics, and capacity characteristics may be excellent.

In addition, the recycled cathode active material of the present invention may include one or more selected from the group consisting of a lithium nickel oxide (LNO)-based cathode active material, a nickel·cobalt·manganese (NCM)-based cathode active material, a nickel·cobalt·aluminum (NCA)-based cathode active material, a nickel·cobalt·-manganese ·aluminum (NCMA)-based cathode active material, and a lithium iron phosphate (LFP)-based cathode active material; may have a crystal structure with a c-axis length of 14.200 to 14.210 Å, a cell volume of 101.65 to 101.75 $Å^3$, and a crystallite size of 82 to 90 nm as measured by X-ray diffraction (XRD); and may have a thermal decomposition temperature of 700 °C or higher as measured by thermogravimetric analysis (TGA). In this case, thermal stability may be excellent, the amount of residual lithium may be reduced, and the initial capacity and lifespan characteristics of a secondary battery may be excellent.

As another specific example, the recycled cathode active material may be a compound represented by Chemical Formula 1 below.

[Chemical Formula 1]    $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. In this case, thermal stability may be excellent, the amount of residual lithium may be reduced, and the initial capacity and lifespan characteristics of a secondary battery may be excellent.

For example, the recycled cathode active material may have a crystal structure with a-axis length of 2.871 to 2.888 Å, preferably 2.872 to 2.878 Å, more preferably 2.874 to 2.876 Å as measured by XRD. Within this range, battery characteristics may be improved.

For example, the recycled cathode active material may have a crystal structure with a c-axis length of 14.200 to 14.210 Å, preferably 14.202 to 14.208 Å, more preferably 14.204 to 14.208 Å as measured by XRD. Within this range, battery characteristics may be improved.

For example, the recycled cathode active material may have a crystal structure with a cell volume of 101.65 to 101.75 Å$^3$, preferably 101.67 to 101.72 Å$^3$, more preferably 101.68 to 101.71 Å$^3$ as measured by XRD. Within this range, battery characteristics may be improved.

For example, the recycled cathode active material may have a crystal structure with a crystallite size of 82 to 90 nm, preferably 84 to 88 nm as measured by XRD. Within this range, battery characteristics may be improved.

For example, the recycled cathode active material may have a thermal decomposition temperature of 700 °C or higher, preferably 720 °C or higher, more preferably 730 to 800 °C as measured by thermogravimetric analysis (TGA). Within this range, due to excellent thermal stability, battery characteristics may be improved.

For example, the surface of the recycled cathode active material may be coated with a metal or carbon, preferably a metal. In this case, the structural stability of the cathode active material may be improved without changing the intrinsic chemical and physical properties of the cathode active material, thereby improving electrochemical properties such as rate performance, lifespan characteristics, and capacity. In addition, the amount of residual lithium and the pH may be reduced by replacing the elements on the surface of the cathode active material with heterogeneous elements, thereby improving the physicochemical properties.

The metal may preferably include one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, based on 1 mol% of metals in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then may be heat-treated at 100 to 1200 °C, more preferably 200 to 1000 °C, still more preferably 250 to 800 °C. In this case, structural stability and electrochemical performance may be improved while maintaining the intrinsic properties of the cathode active material.

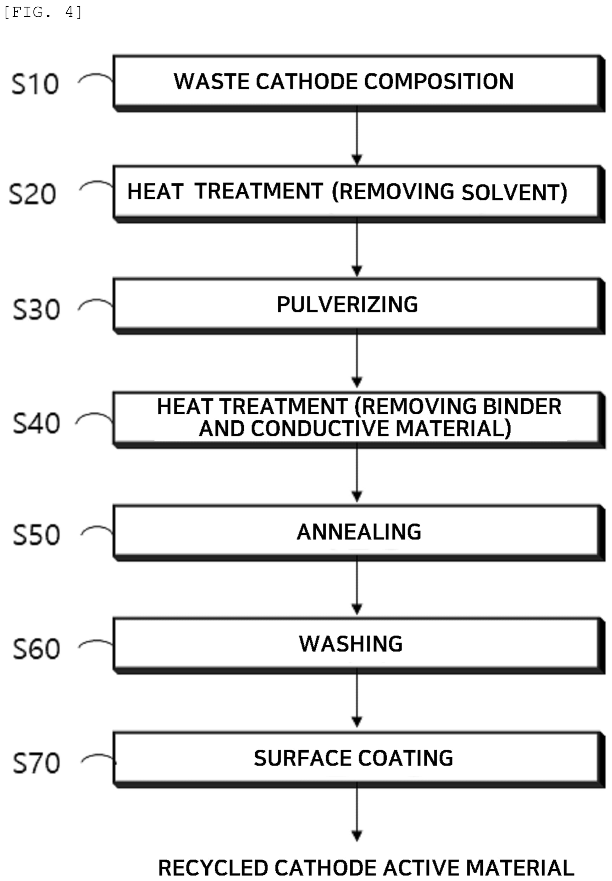

FIG. 4 below is a flowchart for explaining a process for recycling a cathode active material according to one embodiment of the present invention.

Referring to FIG. 4, first, a waste cathode composition is prepared (step S10).

The waste cathode composition may be cathode composition slurry that is defective and does not meet the specifications related to solid concentration, composition ratio, or viscosity generated during the process of preparing a cathode composition, waste cathode composition slurry generated by filter clogging during the process of applying cathode composition slurry to metal foil, or cathode composition slurry remaining after application to metal foil.

The waste cathode composition may include a cathode active material, a conductive material, and a binder, and may be in the form of slurry.

The waste cathode composition may further include a dispersant.

Next, the waste cathode composition is heat-treated to remove the solvent (step S20).

Here, heat treatment is performed to dry and remove the solvent in the waste cathode composition, thereby facilitating the subsequent pulverizing process.

The heat treatment may be performed in air or under an oxygen atmosphere, as a specific example, in air. In this case, by removing the solvent, the subsequent pulverizing process may be easily performed.

For example, the heat treatment temperature may be 80 to 120 °C, as a specific example, 100 °C. Within this range, since the solvent is completely removed, the subsequent pulverizing process may be easily performed.

For example, the heat treatment time may be 30 minutes to 4 hours, as a specific example, 2 hours. Within this range, since the solvent is dried and is completely removed, the subsequent pulverizing process may be easily performed.

For example, the heat treatment may be performed using various types of furnaces. For example, the heat treatment may be performed using a box-type furnace. Preferably, the heat treatment may be performed using a rotary kiln capable of continuous treatment considering productivity.

Next, the waste cathode composition from which the solvent has been removed is pulverized (step S30).

Here, pulverizing is performed to ensure smooth contact between the waste cathode composition and air or oxygen in the subsequent heat treatment step.

The pulverizing may be performed by dry grinding, and may be performed using a hand mill, a pin mill, a disc mill, a cutting mill, or a hammer mill, as a specific example, a pin mill.

The powdered waste cathode composition may be preferably sieved using a sieve with a mesh size of 230 to 500, as a specific example, a sieve with a mesh size of 325. Through the sieving, a cathode composition with uniform particle size may be obtained, and large-sized particles may be removed. Accordingly, the dispersion of the recycled cathode active material may be improved when manufacturing the recycled cathode active material in the form of slurry.

The powdered waste cathode composition may have an average particle size of preferably 45 $\mu$m or less, as a specific example, 10 to 35 $\mu$m. In this case, the binder and conductive material may be completely removed in the subsequent heat treatment process.

Next, the powdered waste cathode composition is heat-treated (step S40).

Here, the heat treatment is performed to thermally decompose the binder and conductive material in the powdered waste cathode composition.

The powdered waste cathode composition is heat-treated at 300 to 650 °C to remove the binder and the conductive material and recover a cathode active material.

The heat treatment of step S40 may be performed in air or under an oxygen atmosphere, as a specific example, in air.

Through the heat treatment in air, the binder and the conductive material in the cathode active material layer are thermally decomposed into $CO_2$ and $H_2O$ and removed. Since the binder is removed, the cathode active material may be obtained from the cathode composition.

It is important that the heat treatment is performed in air or under an oxygen atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and $CO_2$, and disappears.

The heat treatment may be performed at preferably 300 to 650 °C, as a specific example, 550 °C. When the heat treatment is performed at a temperature less than 300 °C, removing the binder may be difficult. When the heat treatment is performed at a temperature exceeding 650 °C, cation mixing may occur due to change in the structure of the cathode active material.

In the present disclosure, cation mixing refers to an irreversible reaction in which lithium, which has a high vapor pressure, evaporates more easily than other elements during heat treatment at high temperatures, and $Ni^{2+}$ is substituted in the empty lithium ion layer.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to the cathode composition may be prevented.

The heat treatment may be performed until the binder and the and conductive material are completely thermally decomposed. For example, the heat treatment may be performed for preferably 30 minutes or more, more preferably 30 minutes to 5 hours, as a specific example, about 30 minutes. Within this range, the binder and conductive material may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, a lithium precursor is added to the recovered cathode active material, and annealing is performed (step S50).

In addition, loss of lithium in the cathode active material occurs during the preceding steps S30 and S40. In step S50, the loss amount of lithium is supplemented. In addition, during the preceding step, a deformed structure (e.g., $Co_3O_4$

in the case of an LCO active material) may be formed on the surface of the cathode active material. In step S50, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples. In addition, since the cathode active material contains calcium or a calcium compound, the lifespan characteristics and resistance characteristics of the recycled cathode active material may be improved.

The lithium precursor may include one or more of $LiOH$, $Li_2CO_3$, $LiNO_3$, and $Li_2O$, preferably, $LiOH$.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added.

For example, when the molar ratio of lithium to other metals (M) in a fresh cathode active material is 1, the lithium precursor may be added in an amount such that the molar ratio of lithium is 0.001 to 0.4, preferably 0.01 to 0.4, more preferably 0.09 to 0.2. As a specific example, when the lithium precursor is added at a molar ratio, which corresponds to a loss ratio relative to a lithium content in a fresh cathode active material, based on ICP analysis results, the capacity may be increased to a level equivalent to that of the fresh cathode active material. Here, the ICP analysis results have an error value of about $\pm 0.02$.

For example, based on 100 mol% in total of lithium included the cathode active material as a raw material, the lithium precursor may be added in an amount corresponding to 1 to 25 mol%, preferably 1 to 20 mol%, more preferably 3 to 17 mol%. Within this range, since there is no residual precursor that causes an increase in the resistance of the recycled cathode active material, battery characteristics may be improved.

For example, the annealing may be performed at 400 to 1000 °C, preferably at 600 to 900 °C in air. This temperature may be modified within a limited range depending on the type of lithium precursor.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When $Li_2CO_3$ is used as the lithium precursor, the annealing temperature is preferably 700 to 900 °C, more preferably 710 to 780 °C, still more preferably 750 to 780 °C. In addition, when $LiOH$ is used as the lithium precursor, the annealing temperature is preferably 400 to 600 °C, more preferably 450 to 480 °C, most preferably 470 to 480 °C.

For example, the annealing time should be 1 hour or more, preferably 15 hours or less, and specifically, 4 to 6 hour. When the annealing time is long, the crystal structure may be sufficiently recovered, but long-term annealing does not have a significant effect on performance. At this time, the annealing equipment may be the same or similar equipment as in heat treatment step S40.

The annealing temperature may be reached at a heating rate of preferably 1 to 10 °C/min, as a specific example, 2 to 4 °C/min. In this case, the crystallinity of the recycled cathode active material may be further increased, thereby improving the battery characteristics of the recycled cathode active material.

For example, the annealing of step 50 includes a cooling process, which may, as a specific example, be natural cooling within a furnace. In this case, the crystallinity of the recycled cathode active material may be further increased, thereby improving the battery characteristics of the recycled cathode active material.

Next, as a washing step, the annealed cathode active material is washed with a washing solution (step S60).

In step S60 of performing washing, since the lithium precursor that did not participate in the reaction in annealing step S50 remains on the surface of the cathode active material in the form of $LiOH$ and $Li_2CO_3$, a residual lithium removal process is required to remove the lithium precursor. Impurities in the form of $LiOH$ and $Li_2CO_3$ must be completely removed, as the impurities may react with an electrolyte solution in later steps to degrade the performance of a battery and generate gases.

In the washing, preferably, the annealed cathode active material and the washing solution are mixed in a weight ratio of 1:3 to 1:20, as a specific example, in a weight ratio of 1:10. In this case, since residual lithium is removed with a small amount of washing solution, a cathode active material having excellent initial discharge capacity and lifespan characteristics may be obtained.

For example, the washing solution may be water or an aqueous alkaline lithium compound solution, preferably water. In this case, the rate performance of a battery may be significantly improved because lithium precursors such as $LiOH$ and $Li_2CO_3$, which tend to remain on the surface of the cathode active material, are completely removed.

In the washing, preferably, the annealed cathode active material and the washing solution are mixed, and filtration is performed. Then, the obtained solid cathode active material is dried.

Mixing of the annealed cathode active material and the washing solution may be performed preferably by stirring. The stirring may be mechanical or ultrasonic stirring, without being limited thereto.

The mechanical stirring may be performed preferably at 100 to 1000 rpm for 5 to 30 minutes, more preferably at 250 to 350 rpm for 5 to 10 minutes.

The filtration is preferably vacuum filtration using a filter, and the drying is preferably vacuum drying at 50 to 140 °C.

Next, a step of coating the surface of the washed cathode active material may be performed (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the annealed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

## Secondary battery

A secondary battery of the present invention includes the recycled cathode active material prepared using the method of recycling a cathode active material. In this case, thermal stability may be excellent, the rate performance of a battery may be greatly improved, and electrochemical performance, resistance characteristics, and capacity characteristics may be excellent.

The secondary battery of the present invention may include all of the contents of the cathode active material and the method of recycling a cathode active material described above. Accordingly, redundant description thereof is omitted.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

When cathode composition slurry containing a cathode active material, a conductive material, and a binder in a composition ratio of 97.5:1.5:1 (cathode active material:conductive material:binder) was prepared, the prepared cathode composition slurry had a composition ratio of 98.5:1:0.5 (cathode active material:conductive material:binder), showing an incorrect composition ratio. Thus, due to the inaccurate composition ratio, the above cathode composition was discarded, and the discarded cathode composition was used as a waste cathode composition.

At this time, the waste cathode composition included an NCMA-based lithium composite transition metal oxide (mol% ratio of Ni:Co:Mn:Al being 88:7:4:1) as the cathode active material, polyvinylidene fluoride (PVDF) as the binder, Super-C as the conductive material, and N-methyl-2-pyrrolidone as the solvent (cathode active material:conductive material:binder = 98.5:1:0.5). The waste cathode composition was heat-treated at 100 °C for 2 hours in air to dry and remove the solvent.

The waste cathode composition from which the solvent had been removed was subjected to dry grinding using a pin mill and then sieved using a sieve with a mesh size of 325 to obtain waste cathode composition powder having an average particle size of 35 $\mu$m or less.

The waste cathode composition powder was heat-treated at 550 °C for 30 minutes in air to remove the binder and the conductive material and recover a cathode active material. At this time, the temperature increase rate was 5 °C/min until the heat treatment temperature was reached, and air was supplied at 3 L/min.

LiOH as a lithium precursor was immediately added to the recovered cathode active material without a washing process, and annealing was performed at 650 °C for 5 hours in air. At this time, based on 100 mol% in total of lithium in the cathode active material as a raw material used in the cathode composition, the lithium precursor was added in an amount corresponding to 15 mol%.

The annealed cathode active material and distilled water were mixed at a weight ratio of 1:10, stirred at 300 rpm for 5 minutes, and then filtered under reduced pressure to obtain solids. The solids were subjected to vacuum drying at 100 to 130 °C for 12 hours to obtain the washed cathode active material. At this time, air was supplied at 3 L/min.

The washed cathode active material was coated with boric acid and heated at 300 °C for 5 hours to produce the final recycled cathode active material. At this time, the temperature increase rate was 2 °C/min until the heat treatment temperature was reached, and air was supplied at 3 L/min.

In the present disclosure, the molar ratio of lithium to other metals in the cathode active material was measured using an ICP analyzer. At this time, an ICP analysis device commonly used in laboratories may be used, but there is no difference depending on measurement devices or methods.

Comparative Example 1

The same procedure as in Example 1 was performed, except that the waste cathode composition from which the solvent had been removed was heat-treated at 550 °C for 30 minutes in air without the dry grinding, sieving, and pulverizing steps.

Reference Example

Instead of a recycled active material, a fresh NCMA-based lithium composite transition metal oxide (mol% ratio of Ni:Co:Mn:Al being 88:7:4:1) was used.

[Test Example I: Residual lithium content]

The residual lithium contents in the annealed cathode active materials obtained in Example 1 and Comparative Example 1 were measured as follows, and the results are shown in Table 1 below.

* Residual lithium content: 5 g of an annealed cathode active material was dispersed in 100 ml of distilled water, mixed at 300 rpm for 5 minutes, filtered to remove the cathode active material, and the resulting solution was titrated with 0.1 M HCl solution to measure the change in pH value to obtain a pH titration curve. The residual LiOH and $Li_2CO_3$ amounts in the cathode active material were calculated using the obtained pH titration curve.

[Table 1]

| Classification | LiOH (wt%) | $Li_2CO_3$ (wt%) | Sum (wt%) |
|---|---|---|---|
| Example 1 | 0.824 | 0.558 | 1.382 |
| Comparative Example 1 | 0.451 | 4.021 | 4.472 |

As shown in Table 1, in the case of Example 1 in which the cathode composition from which the solvent has been removed was pulverized and heat-treated according to the present invention, compared to Comparative Example 1 in which heat treatment was performed without pulverizing, the residual lithium content was significantly reduced.

[Test Example II: Residual fluorine (F) content]

The content of fluorine (F) remaining in the cathode active materials annealed in Example 1 and Comparative Example 1 was measured using an ICP analyzer, and the results are shown in Table 2 below. At this time, an ICP analysis device commonly used in laboratories may be used, but there is no difference depending on measurement devices or methods.

[Table 2]

| Classification | F (mg/kg) |
|---|---|
| Example 1 | 6820 |
| Comparative Example 1 | 2330 |

As shown in Table 2, Example 1, in which the cathode composition from which the solvent had been removed was pulverized and heat-treated according to the present invention, had a higher residual fluorine content than Comparative Example 1. From these results, it was found that in Example 1, the conductive material and binder were sufficiently thermally decomposed and completely removed compared to Comparative Example 1. When the conductive material and binder in the cathode composition are thermally decomposed, LiF remains on the surface of the cathode active material. Example 1, which was pulverized and then heat-treated, has a high residual fluorine content because the cathode composition is in smooth contact with air, and the conductive material and binder are thermally decomposed without residual conductive material and binder. Comparative Example 1 has less residual fluorine because the pulverizing step is omitted, the cathode composition does not come into smooth contact with air, and thermal decomposition of the conductive material and binder is not sufficiently achieved.

[Test Example III: XRD analysis]

The recycled cathode active materials or fresh cathode active material prepared in Example 1 and Reference Example were analyzed by XRD, and the a-axis length, c-axis length, cell volume, and crystallite size of the crystal structure were measured, and the results are shown in Table 3 below.

[Table 3]

| Classific ation | a-Axis (Å) | c-Axis (Å) | Cell volume (Å$^3$) | Crystallite size (nm) |
|---|---|---|---|---|
| Reference Example | 2.874 | 14.205 | 101.60 | 84 |
| Example 1 | 2.875 | 14.207 | 101.69 | 86 |

As shown in Table 3, Example 1 has a-axis length, c-axis length, cell volume, and crystallite size similar to those of the Reference Example. From these results, it was found that the structure of the recycled cathode active material of Example 1 was restored to the level of the raw cathode active material or higher.

[Test Example IV: Evaluation of coin half cell]

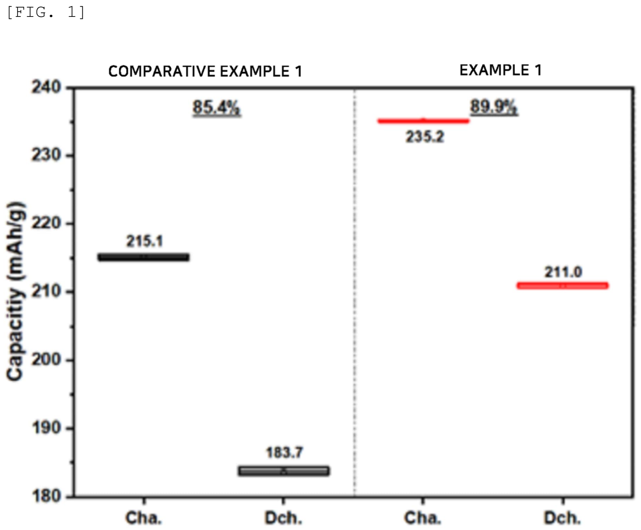

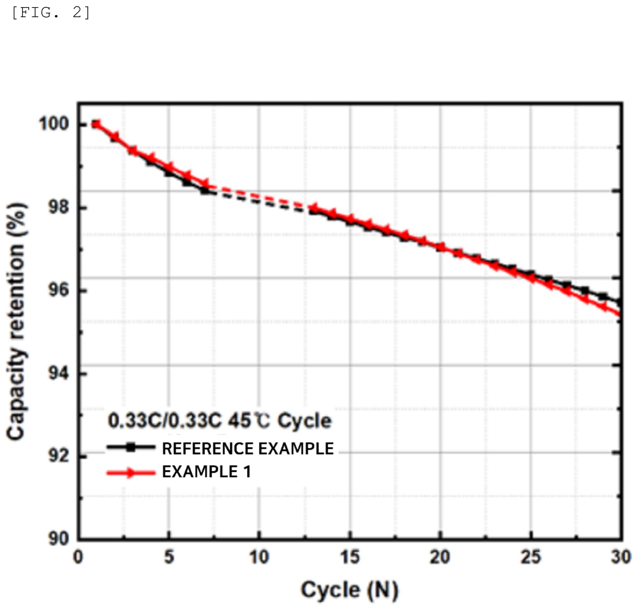

The electrochemical performance of the recycled or fresh cathode active material prepared in Example 1, Comparative Example 1, and Reference Example was measured through coin half cell (hereinafter referred to as 'CHC') evaluation, and the results are shown in FIGS. 1 and 2 below.

* CHC manufacturing: 96 % by weight of a recycled cathode active material, 2 % by weight of carbon black as a conductive material, and 2 % by weight of PVdF as a binder were prepared and mixed with N-methyl-2-pyrrolidone (NMP) to obtain slurry. Aluminum foil was coated with the slurry to manufacture a cathode. Then, a coin half cell (CHC) was manufactured. The electrochemical performance (charge capacity: CH, discharge capacity: DCH, and efficiency: Eff(%)) was evaluated under the conditions of ethylene carbonate (EC): dimethyl methyl carbonate (DMC) = 3:7 (weight ratio) as the electrolyte solution and other additives.
* Initial capacity (CH and DCH) evaluation of CHC: At 25 °C, each cell was subjected to one charge/discharge cycle under the following conditions, and the results are shown in FIG. 1 below.

Charge (CH): 0.2C, CC/CV, 4.25V, 0.05C cut-off
Discharge (DCH): 0.2C, CC, 2.5V, cut-off

* Evaluation of high-temperature lifespan characteristics of CHC: At 45 °C, 30 cycles of charge and discharge were performed on each cell under the following conditions, the capacity retention rate for each cycle was calculated using Equation 1 below, and the results are shown in FIG. 2 below.

Charge: 0.33C, CC/CV, 4.5V, 0.05C cut-off
Discharge: 0.33C, CC, 3.0V, 0.05C cut-off Capacity retention (%) = (Discharge capacity after N cycles / Discharge capacity after 1 cycle) × 100  [Equation 1]

FIG. 1 below is a graph showing the initial charge/discharge capacity as a result of the CHC evaluation performed on each of the recycled cathode active materials prepared in Example 1 and Comparative Example 1.
As shown in FIG. 1 below, the recycled cathode active material (Example 1) according to the present invention had superior initial charge/discharge capacity compared to Comparative Example 1.
In addition, FIG. 2 below is a graph showing the change in capacity retention rate according to the cycle number (Cycle No.) as a result of CHC evaluation for each of the recycled or fresh cathode active materials prepared in Example 1 and Reference Example. Referring to FIG. 2, up to 20 cycles, the recycled cathode active material (Example 1) according to the present invention has a capacity retention rate similar to or higher than that of the fresh cathode active material (Reference Example) at high temperatures. After 20 cycles, the capacity retention of Example 1 decreases slightly compared to Reference Example.

[Test Example V: Analysis of heat treatment temperature with TGA]

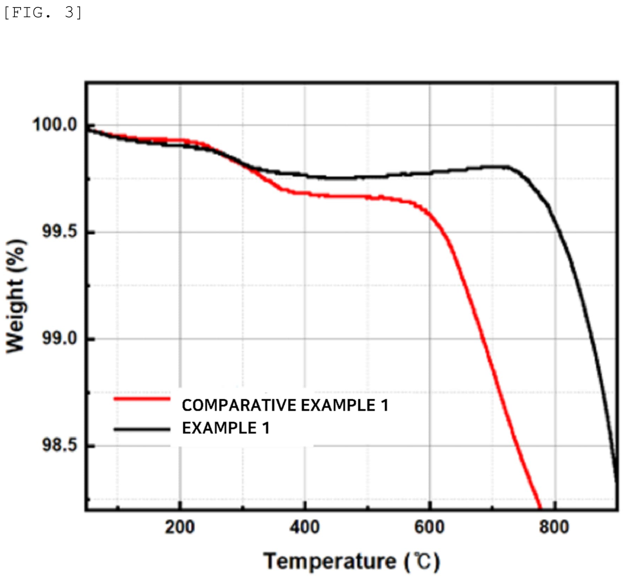

The weight change rate according to the heat treatment temperature was analyzed using TGA for the recycled cathode active materials prepared in Example 1 and Comparative Example 1, and the results are shown in FIG. 3 below. At this time, the temperature conditions started at 50 °C and ended at 900 °C, and the heating rate was 5 °C/min.
As shown in FIG. 3 below, in Example 1, thermal decomposition begins at 740 °C or higher. In contrast, in Comparative Example 1, thermal decomposition begins at 600 °C. From these results, it is confirmed that Example 1 has superior thermal stability than Comparative Example 1.

**Claims**

1. A method of recycling a cathode active material, comprising:

    (a) heat-treating a waste cathode composition containing a cathode active material, a conductive material, a binder, and a solvent to remove the solvent;
    (b) pulverizing the waste cathode composition from which the solvent has been removed;
    (c) heat-treating the powdered waste cathode composition at 300 to 650 °C to remove the binder and the conductive material and recover the cathode active material;
    (d) adding a lithium precursor to the recovered cathode active material and performing annealing at 400 to 1000 °C; and
    (e) washing the annealed cathode active material with a washing solution.

2. The method according to claim 1, wherein the cathode composition is in form of slurry.

3. The method according to claim 1, wherein the heat treatment of step (a) is performed at 80 to 120 °C.

4. The method according to claim 1, wherein the heat treatment of step (a) is performed for 30 minutes to 4 hours.

5. The method according to claim 1, wherein the pulverizing of step (b) is performed by dry grinding.

6. The method according to claim 5, wherein the dry grinding is performed using a hand mill, a pin mill, a disc mill, a cutting mill, or a hammer mill.

7. The method according to claim 1, wherein the pulverizing of step (b) further comprises performing sieving after pulverizing.

8. The method according to claim 1, wherein powder obtained after step (b) has an average particle size of 45 μm or less.

9. The method according to claim 1, wherein the cathode active material comprises one or more selected from the group consisting of a lithium nickel oxide (LNO)-based cathode active material, a nickel·cobalt·manganese (NCM)-based cathode active material, a nickel·cobalt·aluminum (NCA)-based cathode active material, a nickel·cobalt·manganese·aluminum (NCMA)-based cathode active material, and a lithium iron phosphate (LFP)-based cathode active material.

10. The method according to claim 1, wherein the solvent comprises one or more selected from the group consisting of dimethyl sulfoxide (DMSO), isopropyl alcohol, N-methyl-2-pyrrolidone (NMP), acetone, and water.

11. The method according to claim 1, wherein the lithium precursor comprises one or more of LiOH, $Li_2CO_3$, $LiNO_3$, and $Li_2O$.

12. The method according to claim 1, wherein, based on an amount of lithium in the recovered cathode active material, the lithium precursor of step (d) is added in at least an amount corresponding to a reduced molar ratio of lithium in the cathode active material of step (a).

13. The method according to claim 1, wherein the washing solution is water or an aqueous alkaline lithium compound solution.

14. The method according to claim 1, further comprising (f) surface-coating the washed cathode active material.

15. A cathode active material comprising one or more selected from the group consisting of a lithium nickel oxide (LNO)-based cathode active material, a nickel·cobalt·manganese (NCM)-based cathode active material, a nickel·cobalt·aluminum (NCA)-based cathode active material, a nickel·cobalt·manganese·aluminum (NCMA)-based cathode active material, and a lithium iron phosphate (LFP)-based cathode active material; having a crystal structure with a c-axis length of 14.200 to 14.210 Å, a cell volume of 101.65 to 101.75 Å$^3$, and a crystallite size of 82 to 90 nm as measured by X-ray diffraction (XRD); and having a thermal decomposition temperature of 700 °C or higher as measured by thermogravimetric analysis (TGA).

16. The cathode active material according to claim 15, wherein a surface of the cathode active material is coated with a coating agent containing a metal or carbon.

[FIG. 1]

[FIG. 2]

[FIG. 3]

[FIG. 4]

S10 — WASTE CATHODE COMPOSITION

↓

S20 — HEAT TREATMENT (REMOVING SOLVENT)

↓

S30 — PULVERIZING

↓

S40 — HEAT TREATMENT (REMOVING BINDER AND CONDUCTIVE MATERIAL)

↓

S50 — ANNEALING

↓

S60 — WASHING

↓

S70 — SURFACE COATING

↓

RECYCLED CATHODE ACTIVE MATERIAL

## INTERNATIONAL SEARCH REPORT

| | International application No. |
|---|---|
| | **PCT/KR2025/001765** |

| A. | CLASSIFICATION OF SUBJECT MATTER |
|---|---|

**H01M 10/54**(2006.01)i; **H01M 4/1391**(2010.01)i; **H01M 4/131**(2010.01)i; **H01M 4/525**(2010.01)i; **H01M 10/052**(2010.01)i; **H01M 4/36**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/54(2006.01); H01M 10/052(2010.01); H01M 4/13(2010.01); H01M 4/139(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(anode active material), 용매(solvent), 분말화(powdering), 회수 (recovery), 어닐링(annealing), 세척(washing)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2024-0006437 A (LG ENERGY SOLUTION, LTD.) 15 January 2024 (2024-01-15) See paragraphs [0009]-[0037] and [0172]-[0302]. | 1-16 |
| Y | KR 10-2258829 B1 (LG ENERGY SOLUTION, LTD.) 07 June 2021 (2021-06-07) See paragraphs [0049]-[0064] and claim 1. | 1-14 |
| Y | KR 10-2020-0066265 A (JIN, Hong Soo) 09 June 2020 (2020-06-09) See claim 11 and figure 1. | 7 |
| Y | KR 10-2022-0023569 A (COSMO AM&T CO., LTD.) 02 March 2022 (2022-03-02) See paragraphs [0063]-[0065]. | 15-16 |
| A | KR 10-2023-0057094 A (LG ENERGY SOLUTION, LTD.) 28 April 2023 (2023-04-28) See claim 1. | 1-16 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2025** | **07 May 2025** |

| Name and mailing address of the ISA/KR | Authorized officer |
|---|---|
| **Korean Intellectual Property Office** **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/001765**

| Patent document cited in search report | | | Publication date (day/month/year) | Patent family member(s) | | | Publication date (day/month/year) |
|---|---|---|---|---|---|---|---|
| KR | 10-2024-0006437 | A | 15 January 2024 | CA | 3241830 | A1 | 11 January 2024 |
| | | | | CN | 118266102 | A | 28 June 2024 |
| | | | | EP | 4428955 | A1 | 11 September 2024 |
| | | | | JP | 2024-542708 | A | 15 November 2024 |
| | | | | KR | 10-2024-0095127 | A | 25 June 2024 |
| | | | | KR | 10-2675713 | B1 | 19 June 2024 |
| | | | | US | 2025-0030076 | A1 | 23 January 2025 |
| | | | | WO | 2024-010263 | A1 | 11 January 2024 |
| KR | 10-2258829 | B1 | 07 June 2021 | KR | 10-2018-0102390 | A | 17 September 2018 |
| KR | 10-2020-0066265 | A | 09 June 2020 | KR | 10-2385292 | B1 | 11 April 2022 |
| | | | | WO | 2020-111807 | A1 | 04 June 2020 |
| KR | 10-2022-0023569 | A | 02 March 2022 | KR | 10-2515175 | B1 | 29 March 2023 |
| KR | 10-2023-0057094 | A | 28 April 2023 | CN | 117015898 | A | 07 November 2023 |
| | | | | EP | 4297148 | A1 | 27 December 2023 |
| | | | | JP | 2024-507559 | A | 20 February 2024 |
| | | | | JP | 7654814 | B2 | 01 April 2025 |
| | | | | US | 2024-0055597 | A1 | 15 February 2024 |
| | | | | WO | 2023-068525 | A1 | 27 April 2023 |

Form PCT/ISA/210 (patent family annex) (July 2022)

## REFERENCES CITED IN THE DESCRIPTION

**Patent documents cited in the description**

- KR 1020240018703
- KR 1020250014491